# EUROPÄISCHE PATENTANMELDUNG

(11) **EP 3 982 439 A1**
(43) Veröffentlichungstag der Anmeldung: **13.04.2022**
(21) Anmeldenummer: 21199827.3
(22) Anmeldetag: 29.09.2021
(51) Int. Cl.: H01M 4/04, H01M 4/525, H01M 10/04, H01M 10/0525, H01M 10/058, H01M 10/0585

(54) **VERFAHREN ZUR HERSTELLUNG VON BATTERIEZELLEN, VERWENDUNG EINES REINIGUNGSMITTELS UND BATTERIEZELLE**

(30) Priorität: 07.10.2020 DE 102020126296
(71) Anmelder: VOLKSWAGEN AG, 38440 Wolfsburg (DE)
(72) Erfinder: Dagger, Tim, 49811 Lingen (DE); Sicklinger, Johannes, 38300 Wolfenbüttel (DE)
(74) Vertreter: karo IP

(57) **Zusammenfassung**

Die vorliegende Erfindung betrifft ein Verfahren zur Herstellung einer Batteriezelle (18), das wenigsten die folgenden Schritte aufweist:
a) kontinuierliches Zuführen wenigstens eines ersten Werkstoffs (5) und eines zweiten Werkstoffs (2);
b) Zusammenführen des ersten Werkstoffs (5) und zweiten Werkstoffs (2) zu einem Teilstapel (6);
c) Anordnen mehrerer Teilstapel (6) zu einem Zellstapel (14);

wobei während zumindest einem der Schritte a), b) oder c) ein Schritt d) umfassend das Reinigen wenigstens des ersten Werkstoffs (5) durchgeführt wird.
Weiter werden eine Verwendung eines Reinigungsmittels zur Herstellung einer Lithiumlonen-Batteriezelle und eine Batteriezelle vorgeschlagen.

## Beschreibung

Die vorliegende Erfindung betrifft ein Verfahren zur Herstellung von Batteriezellen, die Verwendung eines Reinigungsmittels bei der Herstellung sowie eine Batteriezelle selbst, insbesondere eine Batteriezelle für ein Kraftfahrzeug.

In der Regel weisen Batteriezellen wenigstens drei Schichten auf. Es handelt sich dabei um eine negative Elektrode, eine positive Elektrode und einen Separator. Ein Separator hat die Aufgabe, die Elektroden elektrisch und mechanisch voneinander zu trennen. Von besonderer Bedeutung ist die Qualität der verwendeten Schichten bei Lithium-Ionen Zellen und Lithium-Polymerzellen. Lithium-Ionen Zellen reagieren empfindlich auf Kontaminationen. Beispielsweise führt LiOH (Lithiumhydroxid) zu einer nachweislichen und deutlichen Verschlechterung der Leistung und Lebensdauer einer Batteriezelle.

So ist bei Lithium-Ionen- Batteriezellen die Kathode, also die negative Elektrode, üblicherweise als sogenannte Insertionselektrode ausgebildet. Es bedeutet, dass die Kathode das Aktivmaterial derartig in ihrem Inneren enthält, dass es beim Laden und Entladen der Batteriezelle zum elektrochemischen Austausch mit dem Elektrolyten bereit ist. Bei Lithium-Ionen- Batteriezellen und Lithium-Polymer-Batteriezellen ist die Anode in der Regel eine Insertionselektrode auf Basis von Graphit, in deren Innerem beim Laden der Batteriezelle Metallionen aufgenommen werden.

Insbesondere bei nickelreichen Kathoden können Verunreinigungen beispielsweise in Form von LiOH, Li₂CO₃, NiCO₃ und Ni(OH)₂ auftreten, die entstehen, wenn das Kathodenaktivmaterial vor dem letztlichen Versiegeln der Zelle eine Exposition mit Wasser erfuhr. Hierbei ist es bereits vollkommen ausreichend, wenn geringe Spuren von Wasser in Kontakt mit der Kathode gelangen.

Die oben aufgeführten Verunreinigungen begünstigen Nebenreaktionen des Kathodenaktivmaterials mit dem Elektrolyten. Bei auftretenden Nebenreaktionen kann Elektrolyt zersetzt werden und Elektrolytzersetzungsprodukte in der Zelle bilden. Die entstandenen Elektrolytzersetzungsprodukte bedingen die schlechtere Leistung und Lebensdauer der Zelle.

Versuche, den Anteil von Nickel im Aktivmaterial der Kathode zu reduzieren, haben stets den Nachteil, dass die Energiedichte der Batteriezelle verringert wird.

Ein anderer Ansatz besteht darin, nickelreiche Kathoden in einem Trockenraum zu prozessieren, umso bei jedem Prozessschritt die Wasserexposition der Kathode zu vermeiden. Dies ist jedoch ein sehr kostenaufwändiger Ansatz.

Aus der EP 1665447B1 ist ein Verfahren zum Herstellen einer elektrochemischen Batteriezelle bekannt, bei welchem zur Optimierung einer Elektrode Hydroxid-Ionen von deren Oberfläche entfernt werden. Dazu wird ein Reinigungsmittel, dass eine mit Hydroxid-Ionen reagierende erste Reinigungskomponente enthält, derartig mit der Elektrode in Kontakt gebracht, dass an ihr gebundene Hydroxid-Ionen durch Reaktion mit der ersten Reinigungskomponente von der Elektrodenoberfläche gelöst werden. Anschließend müssen dann die Bestandteile des Reinigungsmittels bzw. der Reaktionsprodukte, die die Funktion der Zelle stören könnten, von der Elektrode entfernt werden. Während das bekannte Verfahren die erforderliche Reinigungswirkung erzielen kann, ist es jedoch in der praktischen Anwendung aufwendig, langsam und kostenintensiv.

Aufgabe der vorliegenden Erfindung ist es daher, die sich aus dem Stand der Technik ergebenden Probleme zumindest teilweise zu lösen. Insbesondere soll ein Verfahren zur Herstellung von Batteriezellen angegeben werden, mit dem eine schnelle und kostengünstige Fertigung erfolgen kann und die Leistung der so hergestellten Batteriezellen keine negativen Einflüsse durch Verunreinigungen erfährt.

Zur Lösung dieser Aufgaben tragen ein Verfahren, eine Verwendung und eine Batteriezelle mit den Merkmalen der unabhängigen Patentansprüche bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Vorliegend wird ein Verfahren zur Herstellung einer Batteriezellen vorgeschlagen, das wenigsten die folgenden Schritte aufweist:
a) kontinuierliches Zuführen wenigstens eines ersten Werkstoffs und eines zweiten Werkstoffs;
b) Zusammenführen des ersten Werkstoffs und des zweiten Werkstoffs zu einem Teilstapel;
c) Anordnen mehrerer Teilstapel zu einem Zellstapel;
wobei während zumindest einem der Schritte a), b) oder c) ein Schritt d), umfassend das Reinigen wenigstens des ersten Werkstoffs, durchgeführt wird.

Für eine kostengünstige Fertigung ist es wichtig, dass in einer kurzen Zeiteinheit hohe Stückzahlen von Batteriezellen gefertigt werden können. Hierzu ist es erforderlich, den Herstellungsprozess zu rationalisieren und insbesondere zu automatisieren. Ziel ist es dabei, einen möglichst kontinuierlichen Herstellungsprozess zu schaffen, indem die für die Batteriezelle benötigten Werkstoffe möglichst kontinuierlich zugeführt werden. Kontinuierlich bedeutet in diesem Zusammenhang entweder, dass der Werkstoff mit einer im Wesentlichen gleichbleibenden Geschwindigkeit oder mit kurzen Taktzeiten schrittweise zugeführt wird. Die Taktzeiten liegen hierbei dann im Bereich von wenigen Sekunden bis hin zu 5 Minuten.

Nachdem im Schritt a) ein erster und ein zweiter Werkstoff kontinuierlich zugeführt worden sind, kann im Schritt b) eine Zusammenführung dieser ersten und zweiten Werkstoffe zu einem Teilstapel erfolgen. Vorzugsweise können dabei auch mehr als zwei Werkstoffe zusammengeführt werden. Denkbar ist beispielsweise eine Zusammenführung von drei, vier oder fünf und mehr (verschiedenen) Werkstoffen. Auf diese Weise können beispielsweise Teilstapel erzeugt werden, bei denen eine Kathode, ein Separator und eine Anode miteinander in einer dreischichtigen Anordnung kombiniert sind. Eine vierschichtige Anordnung kann beispielsweise die Kombination von Separator, Anode, Separator und Kathode aufweisen. Schließlich kann auch eine fünfschichtige Anordnung realisiert werden, bei der ein Separator, eine Anode ein Separator eine Kathode und noch ein weiterer Separator zu einem Teilstapel kombiniert werden.

Im Schritt c) werden die so erzeugten Teilstapel zu einem Zellstapel übereinander angeordnet. Um eine dauerhaft leistungsfähige Batteriezelle zu erhalten, ist dabei vorgesehen, dass wenigstens der erste Werkstoff (also mindestens einer der eingesetzten Werkstoffe, wobei es insbesondere der Werkstoff der Kathode ist) umfassend bzw. möglichst weitgehend oder im Wesentlichen vollständig gereinigt wird. Insbesondere vorteilhaft ist es dabei, wenn die gesamte Abarbeitung der Verfahrensschritte automatisiert erfolgt. In diesem Fall kann auch das Reinigen des wenigstens ersten Werkstoffes bevorzugt in automatisierter Weise erfolgen. Die Schritte des vorliegenden Verfahrens können somit im Rahmen eines rationellen und kostengünstigen automatisierten Herstellungsverfahrens durchgeführt werden. Dies erlaubt es Batteriezellen herzustellen, die einerseits kostengünstig sind und andererseits keine Leistungseinbußen aufgrund von Verunreinigungen aufweisen. Insbesondere kann dabei der gesamte und wenigstens einstufige Reinigungsvorgang in einer Reinigungsvorrichtung als integraler Bestandteil des Herstellungsverfahrens vorgesehen und ausgeführt werden. Alternativ können auch mehrstufige Reinigungsvorgänge auf diese Weise ausgeführt werden.

Besonders die Anwesenheit von Wasser während des Prozesses der Herstellung der Batteriezelle führt dazu, dass sich Verunreinigungen bilden, die dann noch vor der Fertigstellung der Batteriezelle abgereinigt werden. Der große Aufwand, der erforderlich ist, um die Anwesenheit von Wasser während des Herstellungsprozesses der Batteriezelle zu verhindern, kann somit künftig reduziert werden oder entfallen. Stattdessen wird die temporäre Entstehung von Verunreinigungen zumindest teilweise toleriert, um danach dann die gegebenenfalls entstandenen Verunreinigungen noch vor der Fertigstellung der Batteriezelle abzureinigen.

Die Schritte a) bis d) können wenigstens einmal in der hier angegebenen Reichenfolge a), b), c) und d) durchgeführt werden. Es ist möglich, dass diese Schritte unterschiedlich oft und/oder zumindest teilweise zeitlich überlagernd durchgeführt werden, wobei die Durchführung der Schritte ggf. auch an verschiedenen Orten erfolgen kann. Schritt d) kann einmal oder auch mehrfach zu unterschiedlichen Zeitpunkten ausgeführt werden. Insbesondere kann der Schritt d) auch zeitgleich mit einem oder mehreren der anderen Schritten a) bis c) ausgeführt werden.

Insbesondere kann dabei vorgesehen werden, dass der erste Werkstoff ein Aktivmaterial für eine Kathode umfasst (Kathoden-Werkstoff). Es hat sich gezeigt, dass insbesondere an Kathoden Verunreinigungen auftreten, welche die Leistung der Batteriezelle beispielsweise im Hinblick auf Ladungskapazität und die möglichen Lade- bzw. Entladeströme negativ beeinflusst. Dies kann durch die nun vorgeschlagene Elektrodenwaschung im Zellherstellungsprozess vermindert bzw. vermieden bzw. beseitigt werden.

Weiterhin kann vorgesehen werden, dass der zweite Werkstoff ein Separatormedium (Separator-Werkstoff) und ein vierter Werkstoff ein Aktivmaterial für eine Anode (Anoden-Werkstoff) umfasst. Hierdurch ist es möglich, den Schichtaufbau von Teilstapeln so zu wählen, dass diese anschließend nur noch in der gewünschten Anzahl und Reihenfolge zu einem gewünschten Zellstapel aufeinander angeordnet werden müssen. Bei einem Schichtaufbau mit mehr als drei Schichten kann es zu dem sinnvoll sein einen dritten Werkstoff zu verwenden, der dann ebenfalls ein Separatormedium umfasst (Separator-Werkstoff).

Bevorzugt werden weiterhin in Schritt d) die für den jeweiligen Werkstoff typischen Verunreinigungen entfernt. Es hat sich gezeigt, dass die unterschiedlichen Werkstoffe auch zur Bildung von unterschiedlichen Verunreinigungen neigen. Dies ist von unterschiedlichen Faktoren abhängig. Bei der Reinigung, die im Schritt d) erfolgt, wird der Reinigungsvorgang dann einzeln auf die jeweils unterschiedlichen Verunreinigungen angepasst, um eine optimale Reinigungswirkung zu erreichen.

Insbesondere kann der einzelne Werkstoff im Schritt d) in einem Reinigungsbad gereinigt werden. Bei Bedarf können sich daran Folgeprozesse anschließen, die vorzugsweise unter trockenen Bedingungen stattfinden. Hierbei kann es sich beispielsweise um eine Abfolge von Reinigungsbädern, physikalischen Behandlungen oder Trocknungsvorgängen handeln.

Alternativ zum Reinigungsbad der einzelnen oder teilverbundenen Werkstoffe kann insbesondere der Zellstapel im Schritt c) zusätzlich mit einer Hülle umschlossen werden und der Schritt d) innerhalb dieser Hülle durchgeführt werden. Hierdurch kann vermieden werden, dass der Zellstapel nach der Reinigung wieder in Kontakt mit Feuchtigkeit oder anderen Stoffen gelangt. Dazu ist es vorteilhaft, wenn die Befüllung der Hülle und des Zellstapels mit dem Elektrolyten unmittelbar oder zumindest zeitnah nach der Reinigung erfolgt. Das gilt auch für die sich daran anschließende Versiegelung der Batteriezelle. Je kürzer dabei die Zeitdauer zwischen der Reinigung und dem Befüllen bzw. Versiegeln der Hülle der Batteriezelle ist, desto weniger Fremdstoffe und insbesondere Feuchtigkeit können mit dem in der Hülle befindlichen Zellstapel in Kontakt gelangen und reagieren.

Insbesondere vorteilhaft ist es dabei, im Schritt d) eine Kathodenwaschung vorzusehen, weil die Kathode am stärksten zu Verunreinigungen neigt.

Insbesondere kann auch vorgesehen werden, dass in einem dem Schritt d) nachgelagerten Schritt e) eine Trocknung durchgeführt wird. Hierdurch kann die für die Trocknung gegebenenfalls erforderliche Zeitdauer reduziert und die Fertigungsgeschwindigkeit der Batteriezellenfertigung erhöht werden. Die Trocknung kann beispielsweise mittels Druckluft, Heißluft oder sonstigem Wärmeeintrag erfolgen. Insbesondere gilt es dabei zu beachten, dass die Trocknung in kurzer Zeit erfolgt, um eine automatisierte Fertigung der Batteriezelle mit hohen Fertigungsgeschwindigkeiten zu gewährleisten.

Besonders vorteilhaft ist es auch, wenn in Schritt d) zumindest eine der folgenden Komponenten beseitigt wird: LiOH, Li₂CO₃, NiCO₃ und Ni(OH)₂. Diese Verunreinigungen treten besonders häufig bei Lithium-Ionen-Batteriezellen auf.

Weiterhin kann vorteilhafter Weise vorgesehen werden, dass in Schritt d) ein Reinigungsmittel eingesetzt wird, das wenigstens Ethylencarbonat (EC), Ethylmethylcarbonat (EMC), Diethylcarbonat (DEC), Dimethylcarbonat (DMC), Propylencarbonat (PC), Butylencarbonat, Dipropylcarbonat, Methylpropylcarbonat oder Ethylpropylcarbonat enthält. Diese Reinigungsmittel können auch als Elektrolytbestandteile verwendet werden, sodass ein Verbleib von Rückständen in der Batteriezelle nach der durchgeführten Reinigung keine negativen Einflüsse auf die Leistung der Batteriezelle hat.

Hierzu ist vorteilhafterweise die Verwendung eines Reinigungsmittels umfassend zumindest einen der folgenden Bestandteile Ethylencarbonat (EC), Ethylmethylcarbonat (EMC), Diethylcarbonat (DEC), Dimethylcarbonat (DMC), Propylencarbonat (PC), Butylencarbonat, Dipropylcarbonat, Methylpropylcarbonat oder Ethylpropylcarbonat zur Reduzierung von Lithiumhydroxid nach der Elektrodenherstellung oder bei der Herstellung einer Lithium-Ionen-Batteriezelle vorgesehen.

Eine Batteriezelle, die gemäß der vorliegenden Offenbarung hergestellt worden ist, hat den Vorteil, dass sie einerseits kostengünstig produziert werden kann und andererseits keine Leistungseinbußen aufgrund von Verunreinigungen aufweist.

Insbesondere ist es dabei vorteilhaft, wenn die Menge des nach der Reinigung verbliebenen LiOH kleiner oder gleich 0,1 Gewichtsprozent [wt%] bezogen auf das Aktivmaterial ist.

Die Vermeidung von Leistungseinbußen wirkt sich auch positiv beim Betrieb eines Kraftfahrzeugs, das mit wenigstens einer gemäß der vorliegenden Erfindung gefertigten Batteriezelle ausgestattet ist.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig.1:: eine Vorrichtung zur Ausführung eines Herstellungsprozesses für Batteriezellen; und
- Fig. 2:: ein Fahrzeug mit Batteriezellen.

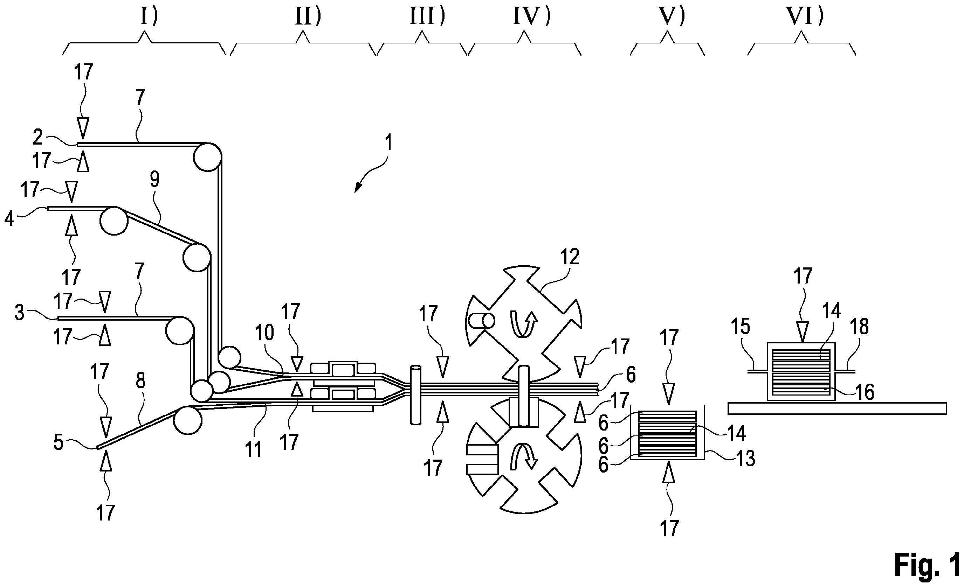

In Fig. 1 ist eine Vorrichtung 1 dargestellt, mit der die vorliegende Erfindung ausgeführt werden kann. Von der linken Seite werden der Vorrichtung 1 vier Werkstoffe 2, 3, 4, 5 zugeführt. Dies bedeutet die Vorrichtung 1 ist dazu ausgebildet einen Teilstapel 6 zu produzieren, der einen vierschichtigen Aufbau aufweist. Bei dem vorliegenden Ausführungsbeispiel sind der zweite Werkstoff 2, der dritte Werkstoff 3 jeweils als Separator 7 ausgebildet. Der erste Werkstoff 5 ist als Kathode 8 und der vierte Werkstoff 4 als Anode 9 ausgebildet. Während des Durchlaufs der Werkstoffe 2, 3, 4, 5 durch die Vorrichtung 1 durchlaufen diese die Abschnitte I) bis VI).

Der Abschnitt I) zeigt das Zuführen der Werkstoffe 2, 3, 4, 5.

Im Abschnitt II) werden der zweite Werkstoff 2 und der vierte Werkstoff 4 zu einem ersten Teilstapel 10 zusammengefasst. Ferner werden der dritte Werkstoff 3 und der erste Werkstoff 5 zu einem zweiten Teilstapel 11 zusammengefasst.

Der sich daran anschließende Abschnitt III) zeigt die Zusammenführung des ersten Teilstapels 10 mit dem zweiten Teilstapel 11 zu dem fertigen Teilstapel 6.

Im Abschnitt IV) wird der bis dahin noch endlos gefertigte Teilstapel 6 mittels einer Schneidvorrichtung 12 auf die benötigte Länge zugeschnitten.

Im Abschnitt V) werden danach mehrere Teilstapel 6 in einem Magazin 13 zu einem Zellstapel 14 übereinander angeordnet. Dieser Zellstapel wird dann zu einem Zellpaket 16 verbunden und anschließend im Abschnitt VI) dicht von einer Hülle 15 umschlossen, wodurch eine Batteriezelle 18 entsteht.

Die von der vorliegenden Erfindung vorgeschlagene Reinigung kann im Verlauf des Herstellprozesses an nahezu beliebiger Stelle während der Abschnitte I) bis VI) und in unterschiedlichsten Formen mittels Reinigungsvorrichtungen 17 erfolgen. In der Figur 1 sind mittels der Dreiecke mögliche Positionen dieser Reinigungsvorrichtungen 17 innerhalb der Vorrichtung 1 dargestellt. An diesen Positionen kann, beispielsweise eine Reinigung mittels der Reinigungsvorrichtung 17 vorgenommen werden.

Während es bei einer besonders einfachen Ausführungsform bereits ausreichend sein kann, nur einen Werkstoff an nur einer Stelle mittels einer Reinigungsvorrichtung 17 zu reinigen, kann die Reinigung der Werkstoffe 2,3,4,5 bei Bedarf aber auch an mehreren unterschiedlichen Positionen erfolgen. Die Reinigungsvorrichtung 17 ist dabei bevorzugt so ausgebildet, dass der zu reinigende Werkstoff 2,3,4,5, der erste oder zweite Teilstapel 10,11, der fertige Teilstapel 6, der Zellstapel 14 oder das Zellpaket 16 die zu reinigenden Elemente darstellen. Diese Elemente werden dazu in einer Lösung gewaschen. Diese Lösung kann beispielsweise einer EC/EMC-Waschlösung sein. Dazu können die zu reinigenden Elemente beispielsweise in die Waschlösung eingetaucht und anschließend getrocknet werden. Die Reinigungsvorrichtung 17 kann auch so ausgestaltet werden, dass die zu reinigenden Elemente mehrere sequenzielle nacheinander angeordnete Lösungsmittelbäder durchlaufen. Durch die von der Reinigungsvorrichtung 17 ausgeführte Reinigungsprozedur werden die zu reinigenden Elemente und folglich auch die daraus hergestellte Batteriezelle 18 von Verunreinigungen wie LiOH (Lithiumhydroxid) befreit.

Die im Abschnitt VI) dargestellte Reinigungsvorrichtung 17 kann weiterhin auch so ausgebildet sein, dass zunächst die EC/EMC-Waschlösung mittels einer nicht detaillierter dargestellten Elektrolytbefüllungsanlage in die Hülle 15 eingebracht und danach wieder abgesaugt wird, wobei das in der Hülle 15 befindliche Zellpaket 16 von Verunreinigungen gereinigt wird. Dieser Vorgang kann bei Bedarf auch mehrmals und vorzugsweise automatisiert wiederholt werden. Besonders vorteilhaft ist es, wenn diese Art der Reinigung lokalisiert in einem Trockenraum durchgeführt wird, da hier ein erneuter Kontakt mit Feuchtigkeit besonders wirksam verhindert werden kann.

Zusätzlich kann bei jeder mittels einer Reinigungsvorrichtung 17 durchgeführten Reinigung während des Reinigungsvorgangs ein elektrisches Potenzial an das zu reinigende Element angelegt werden oder ein Lithium-Salz in dem verwendeten Reinigungsmittel gelöst sein.

Die Verwendung eines gelösten Lithium-Salzes in der Reinigungslösung sowie die Verwendung eines gelösten Lithium-Salzes in der Reinigungslösung in der Kombination mit dem Anlegen eines elektrischen Potentials kann zur (Vor-)Formierung der Zelle beitragen. So wird die Reinigung bereits mit der Formierung kombiniert, was einen prozessualen Zeit- und Kostenvorteil darstellt. Darüber hinaus werden dem System der Zelle während der Reinigung/Vorformierung entstandene Reinigungslösungs/ Elektrolytzersetzungsprodukte entfernt. Dies führt zur Reduzierung parasitärer Reaktionskomponenten in der Zelle. Dadurch steigen die Zykleneffizienz und die Lebensdauer.

Eine weitere Möglichkeit der Reinigung besteht darin, eine Elektrodenwaschung der Kathode 8 vorzusehen. Dies kann als nachgelagerter Prozessschritt der Trocknung nach einer erfolgten Beschichtung mit einem Aktivmaterial und vorgelagert zu dem Prozessschritt des Elektrodenstackings, d. h. dem aufeinander Anordnen von Teilstapeln 6 ausgeführt werden. Hierzu bieten sich insbesondere die Schritte I) bis IV) an, in denen die Werkstoffe 2,3,4,5 noch in Form einer Elektrodenbahn bzw. eines Elektrodensheets mit endloser Länge vorliegen.

Durch die vorliegende Erfindung können bereits entstandene Verunreinigungen zuverlässig entfernt werden. Hierdurch kann eine aufwändige und nicht einhundertprozentig sichere Feuchteregulation innerhalb der ausgedehnten Fertigungstrecke entfallen, wodurch erhebliche Kosten eingespart werden können.

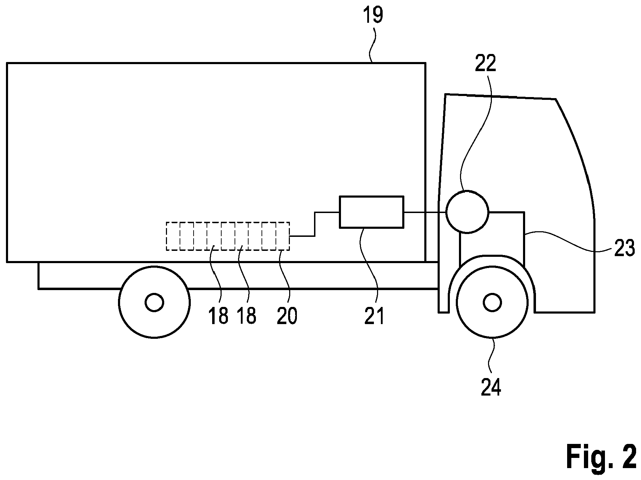

Die Fig. 2 zeigt schließlich ein Fahrzeug 19 mit einem Batteriesystem 20, dass eine Mehrzahl von Batteriezellen 18 umfasst. Das Batteriesystem 20 stellt elektrische Energie an eine Steuerung 21 zur Verfügung, die diese Energie bei Bedarf an einen Elektromotor 22 abgibt, der eine Antriebskraft erzeugt. Die Antriebskraft wiederum wird dann über ein Getriebe 23 an Räder 24 weitergleitet.

### Bezugszeichenliste

- 1: Vorrichtung
- 2: zweite Werkstoff
- 3: dritter Werkstoff
- 4: vierter Werkstoff
- 5: erster Werkstoff
- 6: Teilstapel
- 7: Separator
- 8: Kathode
- 9: Anode
- 10: erster Teilstapel
- 11: zweiter Teilstapel
- 12: Schneidvorrichtung
- 13: Magazin
- 14: Zellstapel
- 15: Hülle
- 16: Zellpaket
- 17: Reinigungsvorrichtung
- 18: Batteriezelle
- 19: Fahrzeug
- 20: Batteriesystem
- 21: Steuerung
- 22: Elektromotor
- 23: Getriebe
- 24: Rad

## Patentansprüche

1. Verfahren zur Herstellung einer Batteriezelle (18), das wenigsten die folgenden Schritte aufweist:
a) kontinuierliches Zuführen wenigstens eines ersten Werkstoffs (5) und eines zweiten Werkstoffs (2);
b) Zusammenführen des ersten Werkstoffs (5) und zweiten Werkstoffs (2) zu einem Teilstapel (6);
c) Anordnen mehrerer Teilstapel (6) zu einem Zellstapel (14);
wobei während zumindest einem der Schritte a), b) oder c) ein Schritt d) umfassend das Reinigen wenigstens des ersten Werkstoffs (5) durchgeführt wird.

2. Verfahren nach dem vorhergehenden Anspruch, wobei der erste Werkstoff (5) ein Aktivmaterial für eine Kathode (8) umfasst.

3. Verfahren nach einem der vorhergehenden Ansprüche, wobei der zweite Werkstoff (2) ein Separatormedium und ein vierter Werkstoff (4) ein Aktivmaterial für eine Anode (9) umfasst.

4. Verfahren nach einem der vorhergehenden Ansprüche, wobei in Schritt d) für den jeweiligen Werkstoff (2,3,4,5) typische Verunreinigungen entfernt werden.

5. Verfahren nach einem der vorhergehenden Ansprüche, wobei der Zellstapel (14) im Schritt c) zusätzlich mit einer Hülle (15) umschlossen wird und der Schritt d) innerhalb dieser Hülle (15) durchgeführt wird.

6. Verfahren nach einem der vorhergehenden Ansprüche, wobei Schritt d) eine Kathodenwaschung umfasst.

7. Verfahren nach einem der vorhergehenden Ansprüche, wobei in einem dem Schritt d) nachgelagerten Schritt e) eine Trocknung durchgeführt wird.

8. Verfahren nach einem der vorhergehenden Ansprüche, wobei in Schritt d) zumindest eine der folgenden Komponenten beseitigt wird: LiOH, Li₂CO₃, NiCO₃ und Ni(OH)₂.

9. Verfahren nach einem der vorhergehenden Ansprüche, wobei in Schritt d) ein Reinigungsmittel eingesetzt wird, das wenigstens Ethylencarbonat (EC), Ethylmethylcarbonat (EMC), Diethylcarbonat (DEC), Dimethylcarbonat (DMC), Propylencarbonat (PC), Butylencarbonat, Dipropylcarbonat, Methylpropylcarbonat oder Ethylpropylcarbonat enthält.

10. Verwendung eines Reinigungsmittels umfassend zumindest einen der folgenden Bestandteile Ethylencarbonat (EC), Ethylmethylcarbonat (EMC), Diethylcarbonat (DEC), Dimethylcarbonat (DMC), Propylencarbonat (PC), Butylencarbonat, Dipropylcarbonat, Methylpropylcarbonat oder Ethylpropylcarbonat zur Reduzierung von Lithiumhydroxid nach der Elektrodenherstellung oder bei der Herstellung einer Lithium-Ionen-Batteriezelle.

11. Batteriezelle (18) hergestellt nach einem der vorhergehenden Patentansprüche 1 bis 9.

12. Fahrzeug (19) mit wenigstens einer Batteriezelle (18) nach dem vorhergehenden Patentanspruch.
